# EUROPEAN PATENT APPLICATION

(11) **EP 4 749 808 A1**
(43) Date of publication of application: **27.05.2026**
(21) Application number: 25199606.2
(22) Date of filing: 02.09.2025
(51) Int. Cl.: H01M 50/581

(54) **SECONDARY BATTERY AND BATTERY MODULE**

(30) Priority: 02.10.2024 KR 20240134112
(71) Applicant: SAMSUNG SDI CO., LTD., Yongin-si, Gyeonggi-do 17084 (KR)
(72) Inventor: PARK, Sang Hun, 16678 Suwon-si (KR); LEE, Dong Wook, 16678 Suwon-si (KR)
(74) Representative: Marks & Clerk LLP

(57) **Abstract**

A secondary battery and a battery module are disclosed. A secondary battery includes an electrode assembly, a case accommodating the electrode assembly, a terminal over the case and electrically connected to the electrode assembly, a connection member over the terminal and connected to the terminal, and a safety member between the terminal and the connection member and configured to separate the terminal from the connection member at a set temperature or higher.

## Description

### BACKGROUND

### 1. Field

Aspects of embodiments of the present disclosure relate to a secondary battery and a battery module.

### 2. Description of the Related Art

Unlike a primary battery that cannot be recharged, a secondary battery is a battery that can be charged and discharged. A low-capacity secondary battery may be used for portable small-sized electronic devices, such as smartphones, feature phones, notebook computers, digital cameras, and camcorders, and a high-capacity battery is widely used as a power source for driving a motor and a power storage battery in hybrid vehicles, electric vehicles, or the like. Such a secondary battery includes electrodes including a positive electrode and/or a negative electrode, an electrode assembly including the electrodes, a case that accommodates the electrode assembly, electrode terminals connected to the electrode assembly, and the like.

As the demand for secondary batteries increases, secondary batteries are increasingly used in the form of a module, which includes a plurality of secondary batteries, rather than a single secondary battery. A battery module generally includes a plurality of secondary batteries. The battery module allows the plurality of secondary batteries to be electrically connected and used.

The battery module includes a safety element and/or a protective substrate electrically connected to the secondary batteries. Each of the secondary batteries may be connected to the safety element and/or the protective substrate through a connection member.

The above-described information disclosed in the background technology of the present invention is provided to improve understanding of the background of the present invention and thus may include information that does not form the related art.

### SUMMARY

According to an aspect of embodiments of the present invention, a secondary battery connected to a connection member, and a battery module including the secondary battery, are provided.

According to another aspect of embodiments of the present invention, a secondary battery including a safety member, and a battery module including the secondary battery, are provided.

According to another aspect of embodiments of the present invention, a secondary battery allowing an electrical connection between the secondary battery and a connection member to be cut off if an abnormal operation occurs in the secondary battery and/or a battery module, and the battery module including the secondary battery, are provided.

However, aspects and problems to be solved by the present invention are not limited to the above-mentioned aspects and problems to be solved, and other aspects and problems to be solved not mentioned can be clearly understood by those skilled in the art from the following description.

According to one or more embodiments of the present invention, a secondary battery includes an electrode assembly, a case accommodating the electrode assembly, a terminal at a side of the case and electrically connected to the electrode assembly, a connection member at a side of the terminal and connected to the terminal, and a safety member between the terminal and the connection member and configured to separate the terminal from the connection member at a set temperature or higher.

According to one or more embodiments of the present invention, a battery module includes a plurality of secondary batteries, and a housing accommodating the plurality of secondary batteries, wherein each of the secondary batteries includes an electrode assembly, a case accommodating the electrode assembly, a terminal over the case and electrically connected to the electrode assembly, a connection member over the terminal and connected to the terminal, and a safety member between the terminal and the connection member and configured to separate the terminal from the connection member at a set temperature or higher.

At least some of the above and other features of the invention are set out in the claims.

### BRIEF DESCRIPTION OF THE DRAWINGS

The following drawings appended to the present specification are intended to illustrate some example embodiments of the present invention, and the present invention will be more clearly understood from the accompanying drawings together with the following description of the invention; however, the drawings should not be construed as limiting the scope of the present invention.
FIG. 1 is a cross-sectional view schematically illustrating a cylindrical secondary battery according to an embodiment of the present invention;
FIG. 2 is a schematic top view of a battery module according to an embodiment of the present invention;
FIG. 3 is a view illustrating an example in which a connection member is connected on top of a secondary battery according to an embodiment of the present invention;
FIG. 4 is a front view of the secondary battery according to an embodiment of the present invention;
FIG. 5 is a front view of the secondary battery to which a safety member according to an embodiment of the present invention is applied;
FIG. 6 is a view illustrating a cross-section taken along the line P-P' of FIG. 3 to describe the safety member according to an embodiment of the present invention;
FIG. 7 is a view of a region "A" of FIG. 5, illustrating a joining part according to an embodiment of the present invention to describe the safety member according to an embodiment of the present invention;
FIGS. 8A to 8C are enlarged views of a region "B" of FIG. 6, and illustrate cross-sectional views of the safety member according to an embodiment of the present invention;
FIG. 9 is a view illustrating a cross-section taken along the line P-P' of FIG. 3 to describe the safety member according to an embodiment of the present invention;
FIGS. 10A to 10C are schematic views each illustrating an example in which the safety member according to an embodiment of the present invention is applied to the joining part; and
FIGS. 11A and 11B are schematic views each illustrating an example in which the safety member according to an embodiment of the present invention is applied to the joining part.

### DETAILED DESCRIPTION

Herein, some example embodiments of the present invention will be described in further detail with reference to the accompanying drawings. The terms or words used in the present specification and claims are not to be construed as being limited to ordinary or dictionary meanings and are to be construed as having meanings and concepts consistent with the technical scope of the present invention based on the principle that an inventor can appropriately define concepts and terms to explain the invention of the inventor in the best way. Therefore, the embodiments described herein and the configuration illustrated in the drawings are only some embodiments and are not necessarily representative of the full technical scope of the present invention, and, thus, it is to be understood that various changes and modifications may be made at the time of filing the present application.

Further, when used in the present specification, "comprise/include" and/or "comprising/including" may specify the presence of described shapes, numbers, steps, operations, members, elements, and/or groups thereof, but may not exclude the presence or addition of one or more other shapes, numbers, steps, operations, members, elements, and/or groups thereof.

Further, for clarity of understanding of the invention, the accompanying drawings may be illustrated as not to actual scale. Rather, sizes of some components may be exaggerated. In addition, the same reference numerals may be assigned to the same components in different embodiments.

The description that two objects for comparison are "the same" as each other may denote that they are the same or substantially the same as each other. Thus, the range of the expression "the same" or "substantially the same" may include a case of having a deviation considered as a low degree, for example, a deviation within 5%. In addition, the description that a certain parameter is the same in a certain region may denote that the parameter is the same from an average perspective.

Terms including ordinals such as "first" and "second" may be used to describe various components, but the components are not to be limited by the terms. These terms are used to distinguish one component from another. Unless particularly described as the opposite, a first component may also be a second component.

Throughout the specification, unless particularly described otherwise, each component may be provided in a singular number or a multiple number.

Arrangement of any configuration on an "upper portion (or lower portion)" of a component or "on (or below)" the component may mean not only any configuration may be disposed to be in contact with an upper surface (or lower surface) of the component, but also that another configuration may be interposed between the component and any configuration disposed on (or below) the component.

Further, when one component is described as being "connected," "coupled," or "joined" to another component, one or more other components may be "connected," "coupled," or "joined" between the two components, even though the component may be directly "connected," "coupled," or "joined" to the other component. In addition, when a part is referred to as being "electrically connected" to other parts, the part may be directly connected to the other parts, or may be connected to the other parts with one or more other devices therebetween.

Throughout the specification, "A and/or B" may denote A or B or A and B, unless particularly otherwise described. That is, "and/or" may include all combinations or arbitrary combinations of a plurality of listed items. "C to D" may denote C or greater to D or less, unless particularly otherwise described.

The terms used in the present specification are intended to describe embodiments of the present disclosure and are not intended to limit the present disclosure.

In the present specification, a Z-axis refers to a height direction of a secondary battery 100. In the present specification, an X-Y plane refers to a plane perpendicular to the Z-axis. For example, the X-Y plane represents a case when viewed from a top surface of the secondary battery 100

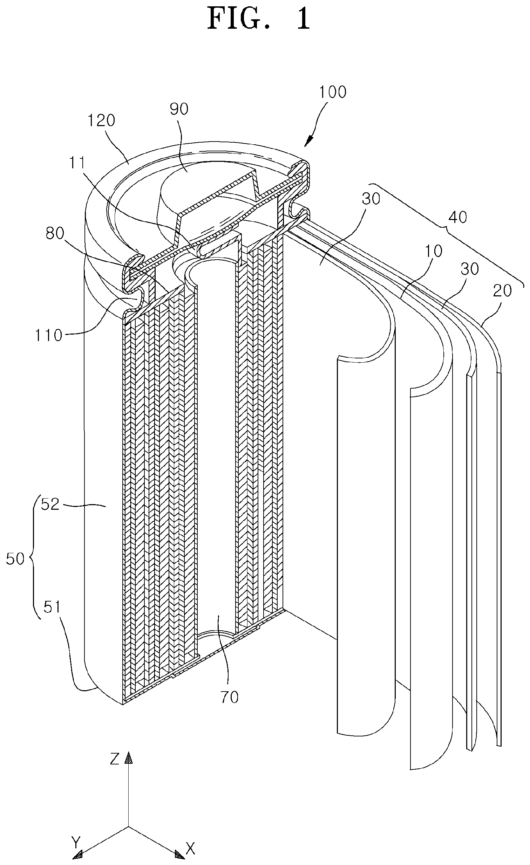

FIG. 1 is a cross-sectional view schematically illustrating a cylindrical battery according to an embodiment of the present invention.

As illustrated in FIG. 1, the cylindrical lithium-ion secondary battery 100 according to an embodiment of the present invention may include a cylindrical case 50, an electrode assembly 40, and a cap assembly 90. In an embodiment, the cylindrical lithium-ion secondary battery 100 may further include a center pin 70. In the secondary battery 100 according to an embodiment of the present invention, the cap assembly 90 also performs a current interruption function and therefore may also be referred to as a current interrupt device.

In an embodiment, the cylindrical case 50 may include a bottom part 51 having a generally circular shape and a cylindrical side wall 52 extending by a length (e.g., a predetermined length) upward from a circumference of the bottom part 51. During a manufacturing process of the secondary battery 100, an upper portion of the cylindrical case 50 is open. Thus, during an assembly process of the secondary battery 100, the electrode assembly 40 and the center pin 70 may be inserted into the cylindrical case 50 together with an electrolyte. The cylindrical case 50 may be made of, for example, steel, stainless steel, aluminum, aluminum alloy, or equivalents thereof, but the present invention is not limited thereto.

In an embodiment, the cylindrical case 50 may include a beading part 110 recessed inward toward a center of the cap assembly 90 below the cap assembly 90 and a crimping part 120 bent inward above the cap assembly 90, to prevent or substantially prevent the cap assembly 90 from being separated to the outside.

The electrode assembly 40 may be accommodated inside the cylindrical case 50. The electrode assembly 40 may include a negative electrode plate 20 including a negative electrode current collector plate coated with a negative electrode active material (e.g., graphite, carbon, or the like), a positive electrode plate 10 including a positive electrode current collector plate coated with a positive electrode active material (e.g., a transition metal oxide (LiCoO₂, LiNiO₂, LiMn₂O₄, or the like)), and a separator 30 located between the negative electrode plate 20 and the positive electrode plate 10 to prevent or substantially prevent a short circuit and allow only lithium ions to move. In an embodiment, the negative electrode plate 20, the positive electrode plate 10, and the separator 30 may be wound in a generally cylindrical shape. In an embodiment, for example, the negative electrode current collector plate may be made of a copper (Cu) foil, the positive electrode current collector plate may be made of an aluminum (Al) foil, and the separator may be made of polyethylene (PE) or polypropylene (PP), but the present invention is not limited thereto.

In an embodiment, a negative electrode tab (not shown) extending and protruding downward by a length (e.g., a predetermined length) may be welded to the negative electrode plate 20, and a positive electrode tab 11 extending and protruding upward by a length (e.g., a predetermined length) may be welded to the positive electrode plate 10, but the reverse is also possible. In an embodiment, for example, the negative electrode tab may be formed of copper (Cu) or nickel (Ni), and the positive electrode tab 11 may be formed of aluminum (Al), but the present invention is not limited thereto.

In an embodiment, the negative electrode tab of the electrode assembly 40 may be welded to the bottom part 51 of the cylindrical case 50. Thus, the cylindrical case 50 may act as a negative electrode. In another embodiment, the positive electrode tab 11 may be welded to the bottom part 51 of the cylindrical case 50, and the cylindrical case 50 may act as a positive electrode.

In an embodiment, a first insulating plate (not shown), which is coupled to the cylindrical case 50 and has a first lower hole (not shown) formed at a center thereof and a second lower hole (not shown) formed at an outer side of the first lower hole, may be interposed between the electrode assembly 40 and the bottom part 51. The first insulating plate prevents or substantially prevents the electrode assembly 40 from coming into electrical contact with the bottom part 51 of the cylindrical case 50. In particular, the first insulating plate prevents or substantially prevents the positive electrode plate 10 of the electrode assembly 40 from coming into electrical contact with the bottom part 51. If a large amount of gas is generated due to an abnormality in the battery, the first lower hole allows the gas to quickly move upward through the center pin 70, and the second lower hole allows the negative electrode tab to pass therethrough to be welded to the bottom part 51.

In an embodiment, a second insulating plate 80, which is coupled to the cylindrical case 50 and has a first upper hole (not shown) formed in the center thereof and a plurality of second upper holes (not shown) formed at an outer side of the first upper hole, may be interposed between the electrode assembly 40 and the cap assembly 90. The second insulating plate 80 prevents or substantially prevents the electrode assembly 40 from coming into electrical contact with the cap assembly 90. In particular, the second insulating plate 80 prevents or substantially prevents the negative electrode plate 20 of the electrode assembly 40 from coming into electrical contact with the cap assembly 90. If a large amount of gas is generated due to an abnormality, the first upper hole allows the gas to quickly move to the cap assembly 90, and the second upper hole allows the positive electrode tab to pass therethrough to be welded to the cap assembly 90. In an embodiment, during an electrolyte injection process, the other second upper holes allow the electrolyte to quickly flow into the electrode assembly 40.

In an embodiment, a diameter of each of the first lower and upper holes in the first insulating plate and the second insulating plate 80 is less than a diameter of the center pin 70, and the center pin 70 is prevented or substantially prevented from coming into electrical contact with the bottom part 51 of the cylindrical case 50 or the cap assembly 90 due to an external impact.

In an embodiment, the center pin 70 has the form of a hollow circular pipe, and may be coupled generally at a center of the electrode assembly 40. The center pin 70 may be made of, for example, steel, stainless steel, aluminum, an aluminum alloy, or polybutylene terephthalate, but the present invention is not limited thereto. The center pin 70 may suppress deformation of the electrode assembly 40 during charging and discharging of the secondary battery 100, and function as a moving path for a gas generated inside the secondary battery 100. However, in one or more embodiments, the center pin 70 may be omitted.

In an embodiment, the cap assembly 90 includes a cap-up. The cap assembly 90 may further include at least one of a cap-down, a vent, and an insulator. The cap assembly 90 is coupled to an opening of the case 50 such that the electrode assembly 40 is sealed inside the case 50.

However, the present invention is not limited thereto, and the case may be configured in any of various shapes, such as a cylindrical shape, a pouch shape, or the like. In addition, the case may be made of a metal such as aluminum, an aluminum alloy, nickel-plated steel, or a laminate film or plastic forming a pouch.

As described above, the electrode assembly 40 includes a negative electrode formed by the negative electrode plate 20, a positive electrode formed by the positive electrode plate 10, and the separator 30 located between the negative electrode and the positive electrode. The electrode assembly 40 is accommodated together with an electrolyte (not shown) in the cylindrical case 50. Herein, the electrode assembly 40 and the electrolyte will be described.

For the positive electrode active material, a compound (lithiated intercalation compound) capable of reversibly intercalating and deintercalating lithium may be used. In an embodiment, one or more of a composite oxide of lithium and a metal selected from cobalt, manganese, nickel, and a combination thereof may be used.

The composite oxide may be a lithium-transition metal composite oxide, and examples thereof may include lithium nickel-based oxide, lithium cobalt-based oxide, lithium manganese-based oxide, lithium iron phosphate-based compound, cobalt-free nickel-manganese-based oxide, or a combination thereof.

As an example, compounds represented by any one of the following chemical formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂(0.90≤a≤1.8, 0.001≤b≤0.1); LiₐMn_{1-b}G_{b}O₂ (0.90≤a≤1.8, 0.001≤b≤0.1); LiₐMn₂G_{b}O₄(0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare-earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode for a lithium battery may include a current collector and a positive electrode active material layer formed on the current collector. The positive electrode active material layer includes a positive electrode active material and may further include a binder and/or a conductive material.

In an embodiment, a content of the positive electrode active material may be 90 wt% to 99.5 wt% based on 100 wt% of the positive electrode active material layer, and a content of each of the binder and the conductive material may be 0.5 wt% to 5 wt% based on 100 wt% of the positive electrode active material layer.

In an embodiment, Al may be used as the current collector, but the present invention is not limited thereto.

The negative electrode active material may be a material that reversibly intercalates/deintercalates lithium ions, lithium metal, a lithium metal alloy, a material capable of doping and dedoping lithium, or a transition metal oxide.

The material capable of reversible intercalation and deintercalation of lithium ions is a carbon-based negative electrode active material, and may include, for example, crystalline carbon, amorphous carbon, or a combination thereof. Examples of the crystalline carbon may include graphite, such as natural graphite or artificial graphite. Examples of the amorphous carbon may include soft carbon or hard carbon, mesophase pitch carbide, calcined coke, and the like.

An Si-based negative electrode active material or Sn-based negative electrode active material may be used as the material capable of doping and dedoping lithium. The Si-based negative electrode active material may include silicon, a silicon-carbon composite, SiOₓ (0 < x ≤ 2), or a combination thereof.

The silicon-carbon composite may be a composite of silicon and amorphous carbon. According to an embodiment, the silicon-carbon composite may be in the form of silicon particles and amorphous carbon coated on a surface of the silicon particles.

The silicon-carbon composite may further include crystalline carbon. For example, the silicon-carbon composite may include a core including crystalline carbon and silicon particles and an amorphous carbon coating layer located on a surface of the core.

The negative electrode for the lithium secondary battery 100 includes a current collector and a negative electrode active material layer located on the current collector. The negative electrode active material layer includes a negative electrode active material and may further include a binder and/or a conductive material.

In an embodiment, for example, the negative electrode active material layer may include 90 wt% to 99 wt% of the negative electrode active material, 0.5 wt% to 5 wt% of the binder, and 0 wt% to 5 wt% of the conductive material.

Examples of the binder may include a non-aqueous binder, an aqueous binder, a dry binder, or a combination thereof. If the aqueous binder is used as the negative electrode binder, a cellulose-based compound capable of imparting viscosity may be further included.

The negative electrode current collector may be selected from a copper foil, a nickel foil, a stainless steel foil, a titanium foil, a nickel foam, a copper foam, a polymer substrate coated with a conductive metal, and a combination thereof.

In an embodiment, the electrolyte for the lithium secondary battery 100 includes a non-aqueous organic solvent and a lithium salt.

The non-aqueous organic solvent functions as a medium through which ions taking part in the electrochemical reaction of a battery can move.

In an embodiment, the non-aqueous organic solvent may be a carbonate-based, ester-based, ether-based, ketone-based, alcohol-based solvent, aprotic solvent, or a combination thereof, and may be used alone or in combination of two or more thereof.

In an embodiment, if a carbonate-based solvent is used, a cyclic carbonate and a chain carbonate may be mixed and used.

Depending on the type of the secondary battery 100, a separator may be present between the positive electrode and the negative electrode. In an embodiment, the separator may be made of polyethylene, polypropylene, polyvinylidene fluoride, or a multilayer film of two or more layers thereof.

The separator 30 may include a porous substrate and a coating layer including an organic material, an inorganic material, or a combination thereof located on one surface or both, or opposite, surfaces of the porous substrate.

In an embodiment, the organic material may include a polyvinylidene fluoride-based polymer or a (meth)acrylic-based polymer.

In an embodiment, the inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present invention is not limited thereto.

The organic and inorganic materials may be present by being mixed in one coating layer or may be present in a form in which a coating layer including organic materials and a coating layer including inorganic materials are stacked.

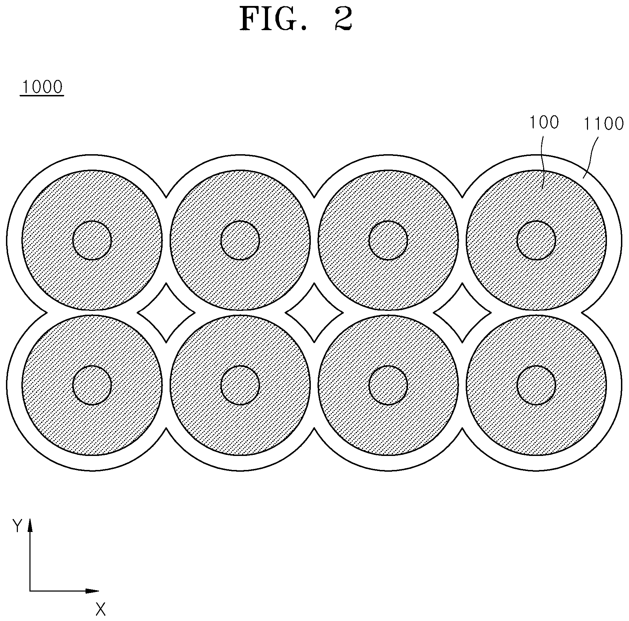

FIG. 2 is a schematic top view of a battery module according to an embodiment of the present invention.

As shown in FIG. 2, a battery module 1000 according to an embodiment includes a plurality of secondary batteries 100 and a housing 1100 accommodating the plurality of secondary batteries 100. In FIG. 2, the battery module 1000 is shown as including eight secondary batteries 100. However, this is provided as an example for convenience of description, and a number of the secondary batteries 100 included in the battery module 1000 according to the present invention is not limited thereto. The battery module 1000 may include two or more secondary batteries 100. The description of the secondary battery 100 may be the same or similar to that provided in FIG. 1.

The housing 1100 includes a body into which at least one side of each of the plurality of secondary batteries 100 is inserted. The body functions as a holder that allows the plurality of secondary batteries 100 to be arranged in a direction. The body may include a plurality of holes, into each of which a side of each of the plurality of secondary batteries 100 is inserted. The number of the plurality of holes is greater than or equal to the number of the plurality of secondary batteries 100. In an embodiment, the plurality of holes may, for example, be formed in the form of a simple cubic (SC), as shown in FIG. 2. In an embodiment, the plurality of holes may, for example, be formed in the form of a body-centered cubic (BCC), a face-centered cubic (FCC), or a hexagonal close-packed (HCP), rather than the simple cubic (SC) form shown in FIG. 2. That is, the plurality of holes may be arranged in any of various structures. Further, the plurality of holes may vary in size or shape and may, for example, have a cross-sectional shape, such as a circular shape, a polygonal shape, or the like.

The battery module 1000 may further include a protection circuit module (not shown) that protects the plurality of secondary batteries 100.

The protection circuit module may include, for example, a protection circuit board, elements, external terminals, and the like.

The elements, for example, may be disposed on the protection circuit board. The elements include, for example, safety elements, an integrated circuit, and the like. The safety elements include, for example, passive elements, such as resistors and capacitors of the protection circuit board, or active elements, such as field-effect transistors. The safety elements may include, for example, positive temperature coefficient (PTC) elements and/or thermal cutoff (TCO) elements. The battery module 1000 may further include a connection member that connects the secondary batteries 100 and the protection circuit module.

If an abnormal operation occurs in the secondary battery 100 and/or the battery module 1000, it is desirable to cut off the connection between the secondary battery 100 and the connection member for safety. At this time, the abnormal operation includes a temperature increase caused by overcurrent and/or charging and discharging.

Herein, the connection member and a connection cut-off member that cuts off the connection between these connection members will be described in further detail.

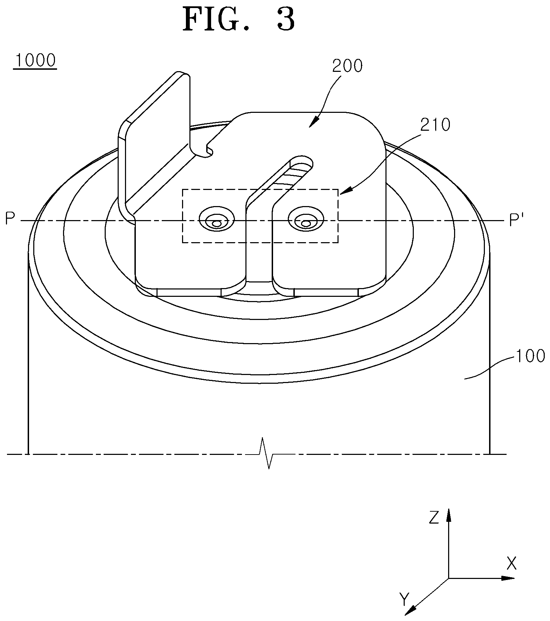

FIG. 3 is a view illustrating an example in which the connection member is connected on top of a secondary battery according to an embodiment of the present invention.

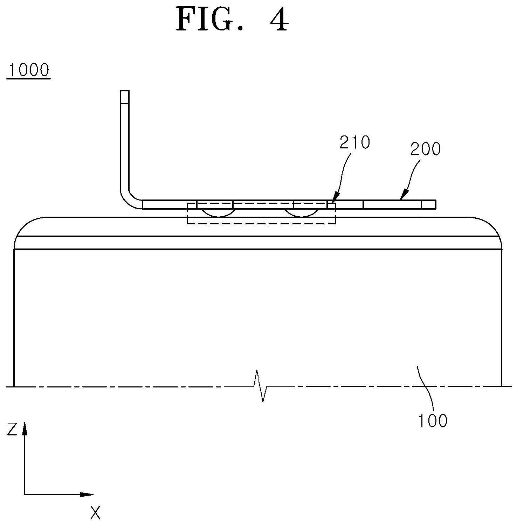

FIG. 4 is a front view of the secondary battery according to an embodiment of the present invention.

In FIGS. 3 and 4, "100" denotes the secondary battery according to an embodiment of the present invention described in FIGS. 1 and 2. In FIGS. 3 and 4, "200" denotes a connection member.

The secondary battery 100 according to an embodiment of the present invention includes an electrode assembly 40, a case 50 accommodating the electrode assembly 40, a terminal (e.g., including the cap assembly 90 described in FIG. 1) located on an upper portion of the case 50 and electrically connected to the electrode assembly 40, and a connection member 200.

Descriptions of the electrode assembly 40, the case 50, and/or the terminal 90 may be the same or similar to those provided in FIGS. 1 and 2.

As shown in FIG. 3, the connection member 200 is connected to the secondary battery 100. For example, the connection member 200 is located on top of the terminal 90 and electrically connected to the terminal 90.

For example, the connection member 200 includes a joining part 210 for joining to the secondary battery 100. The joining part 210 is a region formed as the connection member 200 and the terminal 90 are joined together.

In an embodiment, for example, the joining part 210 is formed by joining the connection member 200 and the terminal 90 through welding. The welding may include any method that joins two materials by applying force or heat, such as resistance welding including ultrasonic welding, laser welding, high-frequency welding, plasma welding, and the like.

Through this, the joining part 210 may improve a welding strength between the secondary battery 100 and the connection member 200. The joining part 210 may allow stable electrical supply between the connection member 200 and the secondary battery 100.

For example, the joining part 210 is formed to be recessed in a portion of the connection member 200. For example, the joining part 210 may be formed to extend downward toward the terminal 90. That is, the joining part 210 is, for example, formed to protrude toward the secondary battery 100 from the connection member 200. Accordingly, when viewed from above, the joining part 210 may be formed to be recessed downward.

As shown in FIGS. 3 and 4, the connection member 200 may be joined to an upper portion of the secondary battery 100. In an embodiment, for example, the connection member 200 may be joined to the terminal 90 that is provided on the upper portion of the case 50 in the secondary battery 100. In an embodiment, for example, the connection member 200 may be joined to the upper portion of the case 50.

However, unlike what is shown in FIGS. 3 and 4, the connection member 200 may be connected to a side or lower portion of the secondary battery 100, or may be connected through a combination of both. The connection member 200 may be provided at any part that is electrically connectable to the secondary battery 100.

The secondary battery 100 may be in an abnormal state due to impacts from outside the battery module 1000 or due to various other factors. The abnormal state includes, for example, any state in which the secondary battery 100 does not operate normally, such as swelling of the secondary battery 100, electrolyte leakage, overcharging, overdischarging, or abnormalities in power supply. In this case, it is desirable that the battery module 1000 cut off the supply of current to the secondary battery 100 to improve safety. A further detailed description of this approach will be provided below.

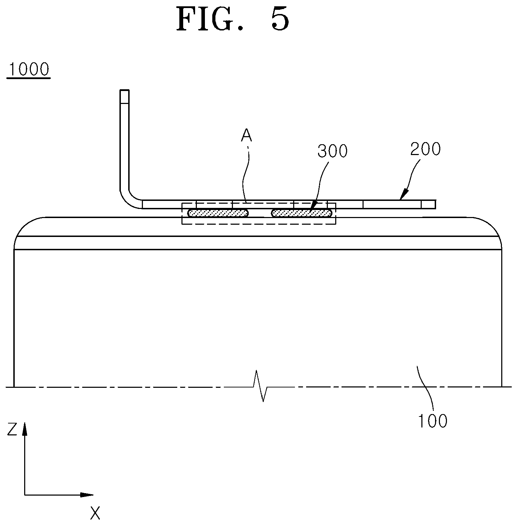

FIG. 5 is a front view of the secondary battery to which a safety member according to an embodiment of the present invention is applied.

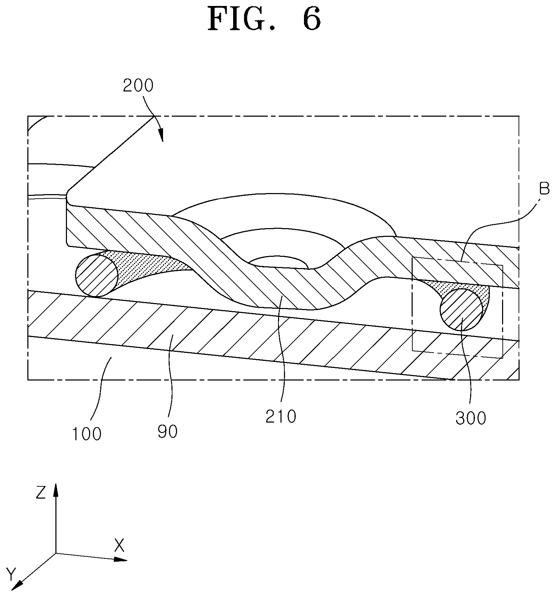

FIG. 6 is a cross-sectional view taken along the line P-P' of FIG. 3 to describe the safety member according to an embodiment of the present invention.

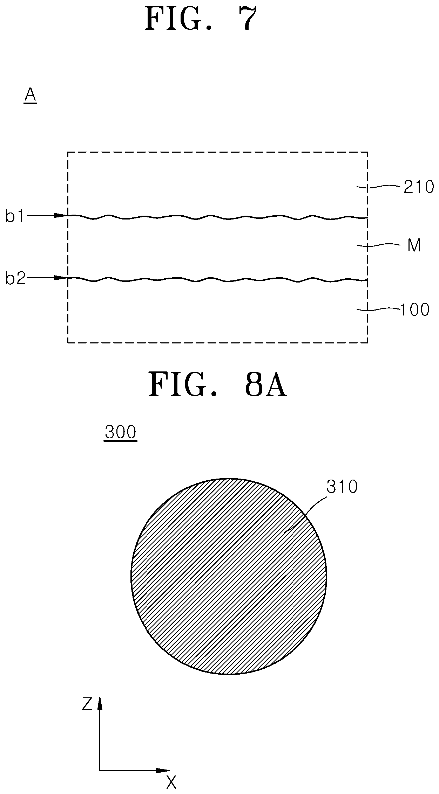

FIG. 7 is a view of a region "A" of FIG. 5, illustrating a joining part according to an embodiment of the present invention to describe the safety member according to an embodiment of the present invention.

In FIG. 5, "100" denotes the secondary battery according to an embodiment of the present invention described in FIGS. 1 to 4. In FIG. 5, "200" denotes the connection member described in FIGS. 3 and 4. In FIG. 5, "300" denotes the safety member.

The secondary battery 100 according to an embodiment of the present invention includes an electrode assembly 40, a case 50 accommodating the electrode assembly 40, a terminal 90 located on an upper portion of the case 50 and electrically connected to the electrode assembly 40, the connection member 200 located on an upper portion of the terminal 90 and connected to the terminal 90, and the safety member 300 located between the terminal 90 and the connection member 200 and configured to separate the terminal 90 from the connection member 200 at a set temperature or higher.

In addition, the connection member 200 includes a joining part 210 that is joined to the terminal 90.

Further, the battery module 1000 according to an embodiment of the present invention includes a plurality of secondary batteries 100, and the housing 1100 accommodating the plurality of secondary batteries 100.

Descriptions of the electrode assembly 40, the case 50, the terminal 90, and/or the connection member 200 may be the same as or similar to those described in FIGS. 1 to 4. The safety member 300 will be described in further detail with reference to FIGS. 5 to 7.

The safety member 300 increases a physical distance between the secondary battery 100 and the connection member 200 if the secondary battery 100 is in an abnormal state. In this case, the abnormal state includes a state in which the temperature of the secondary battery 100 increases. In an embodiment, the abnormal state may be a state in which the temperature of the connection member 200 increases.

The safety member 300 separates (e.g., moves apart) the terminal 90 from the connection member 200 at a set temperature or higher. For example, the safety member 300 separates the terminal 90 from the connection member 200 as the temperature increases.

The safety member 300 is located between the connection member 200 and the secondary battery 100. For example, the safety member 300 is located above the terminal 90 and below the connection member 200.

The safety member 300 is formed to surround at least a portion of the joining part 210.

For example, the safety member 300 may surround the joining part 210 in a closed cross-sectional shape. For example, the safety member 300 may be formed in a ring shape to be provided around the joining part 210, centered on the joining part 210. However, a shape of the safety member 300 is not limited thereto. The safety member 300 may be formed in any suitable shape that can be provided and fixed around the joining part 210.

In this case, for example, the safety member 300 may be disposed at an equal distance from the joining part 210. Through this, the safety member 300 may push the terminal 90 and the connection member 200 away from each other with uniform force at equally spaced points. Thus, a problem in which the terminal 90 and the connection member 200 are separated on a side of the safety member 300 but not separated on another side of the safety member 300 may be prevented or substantially prevented in advance.

The safety member 300 may cut off the flow of current from the connection member 200 to the secondary battery 100 if the secondary battery 100 corresponds to an abnormal state.

In an embodiment, for example, the safety member 300 expands in volume if the secondary battery 100 is in an abnormal state. For example, the safety member 300 thermally expands at the set temperature or higher to separate the terminal 90 from the connection member 200.

For example, the safety member 300 expands in a direction in which the secondary battery 100 and the connection member 200 move away from each other (herein referred to as a vertical direction). In an embodiment, for example, the safety member 300 may expand only in the vertical direction. In another embodiment, the safety member 300 may expand uniformly in all directions, including the vertical direction. In an embodiment, the safety member 300 may expand in the vertical and horizontal directions. As such, the safety member 300 may expand in directions including the vertical direction. In an embodiment, the safety member 300 may expand the most in the vertical direction.

The safety member 300 includes a thermally expandable material to enable volume expansion in an abnormal state. The thermally expandable material includes a material that expands in volume if heated.

For example, the safety member 300 receives heat as the temperature of the secondary battery 100 increases. For example, the safety member 300 may receive heat from the secondary battery 100 through conduction, convection, radiation, or contact with the secondary battery 100. The safety member 300 expands in volume if heated, thereby reducing a bonding strength of the joining part 210. Through this, the safety member 300 reduces the bonding strength of the joining part 210. For example, the safety member 300 may expand to apply a force in a direction that reduces the bonding strength of the joining part 210.

For example, as the safety member 300 expands in volume, the safety member 300 increases a distance between the connection member 200 located thereabove and the secondary battery 100 located therebelow.

FIG. 7 is an enlarged view of the joining part 210 to describe operation processes of the safety member 300. In FIG. 7, "M" denotes an alloy layer that includes an alloy formed by welding the connection member 200 and the secondary battery 100. In addition, in FIG. 7, "b1" denotes a first boundary, which is a boundary between the connection member 200 and the alloy layer M. In addition, in FIG. 7, "b2" denotes a second boundary, which is a boundary between the secondary battery 100 and the alloy layer M.

As described above, as the safety member 300 expands in volume, the safety member 300 exerts an upward force on the connection member 200 and exerts a downward force on the secondary battery 100. The first boundary b1 and the second boundary b2, which are boundaries between the alloy layer M and the base materials (including, for example, the connection member 200 and the secondary battery 100), are formed with relatively weaker bonding strength compared to the alloy layer M or the base materials. Accordingly, a crack may occur at the first boundary b1 and/or the second boundary b2 as the safety member 300 expands in volume.

Through this, the safety member 300 separates the secondary battery 100 from the connection member 200.

For example, the safety member 300 may include a thermally expandable material with a high thermal expansion coefficient. For example, the safety member 300 may include any of materials such as metals, rubber, and polymers with a high thermal expansion coefficient.

For example, the safety member 300 may include any of materials with a higher thermal expansion coefficient than materials included in the terminal 90 of the secondary battery 100.

For example, if the terminal 90 of the secondary battery 100 includes iron, the safety member 300 may include a material with a higher thermal expansion coefficient than iron. For example, the safety member 300 includes any of materials, such as metals, rubber, and polymers with a thermal expansion coefficient greater than or equal to 12.3 x 10⁻⁶/°C, which is the thermal expansion coefficient of iron. In an embodiment, for example, the safety member 300 includes any of aluminum, manganese, cobalt, nickel, copper, zinc, tin, and lead, or an alloy or combination of two or more thereof.

For example, if the terminal 90 includes aluminum, the safety member 300 may include a material with a higher thermal expansion coefficient than aluminum. In an embodiment, for example, the safety member 300 includes any of materials such as metals, rubber, and polymers with a thermal expansion coefficient greater than or equal to 24.0 x 10⁻⁶/°C, which is the thermal expansion coefficient of aluminum. In an embodiment, for example, the safety member 300 includes rubber, ebonite, zinc, lead, and magnesium, or an alloy or combination of two or more thereof.

In an embodiment, for example, the safety member 300 may include a material with a higher thermal expansion coefficient than the material included in the connection member 200. In an embodiment, for example, the connection member 200 includes copper, and the safety member 300 may include a material with a higher thermal expansion coefficient than copper. In an embodiment, for example, the safety member 300 includes any of materials such as metals, rubber, and polymers with a thermal expansion coefficient greater than or equal to 16.5 x 10⁻⁶/°C, which is the thermal expansion coefficient of copper. For example, the safety member 300 includes any of manganese, zinc, silver, tin, and lead, or an alloy or combination of two or more thereof.

In an embodiment, for example, the safety member 300 may include a material with a higher thermal expansion coefficient than that included in the case 50 of the secondary battery 100 and the connection member 200.

The secondary battery 100 and/or the battery module 1000 according to an embodiment of the present invention may have a fuse function through this approach without installing separate temperature sensors, pressure sensors, or the like, thereby enhancing safety.

Various embodiments that enable the safety member 300 to expand efficiently will be described below.

FIGS. 8A to 8C are enlarged views of a region "B" of FIG. 6, and illustrate cross-sectional views of the safety member according to an embodiment of the present invention.

In FIG. 8A to FIG. 8C, "300" denotes the safety member according to an embodiment of the present invention described with reference to FIGS. 5 to 7. FIGS. 8A to 8C are a set of cross-sectional views of the safety member 300 in the vertical direction. In this case, the cross-section in the vertical direction is a cross-section parallel to the height direction of the secondary battery 100 (a Z-axis).

As described in FIGS. 5 to 7, a cross-section of the safety member 300 is formed in a shape that may expand in directions, including the vertical direction (for example, the height direction of the secondary battery 100 (the Z-axis)).

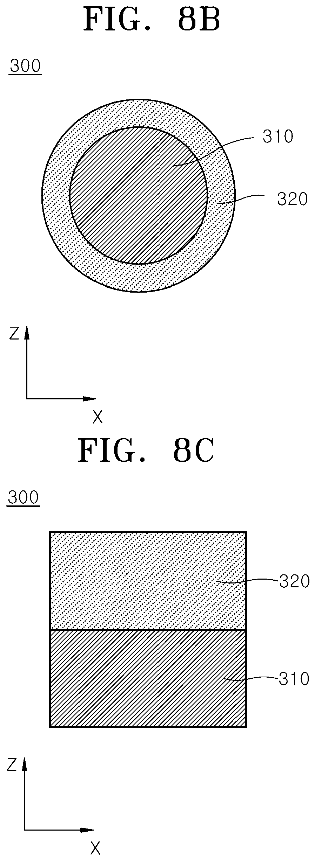

For example, the cross-section of the safety member 300 may be formed in at least one among a circular shape, a semicircular shape, and a polygonal shape (including, for example, a square shape, a rectangular shape, and the like). FIGS. 8A and 8B illustrate an example in which the safety member 300 has a circular cross-section. FIG. 8C illustrates an example in which the safety member 300 has a rectangular cross-section.

The safety member 300 includes a body 310 including a thermally expandable material. In addition, the safety member 300 may further include an insulating layer 320.

The body 310 includes a thermally expandable material that expands in volume in a direction in which the terminal 90 and the connection member 200 move away from each other at a set temperature or higher. In an embodiment, for example, the set temperature is between 90 °C and 200 °C. In an embodiment, for example, the set temperature is between 90 °C and 180 °C. In an embodiment, for example, the set temperature is between 95 °C and 180 °C. In an embodiment, for example, the set temperature is between 95 °C and 170 °C. In an embodiment, for example, the set temperature is between 95 °C and 160 °C. In an embodiment, for example, the set temperature is between 100 °C and 160 °C.

The body 310 may include a material with a high thermal expansion coefficient or may be made of a mixture of the material with a high thermal expansion coefficient and other materials.

In this case, the material with a high thermal expansion coefficient is a material that has a higher thermal expansion coefficient than the material included in the base material (including, for example, the terminal 90 and/or the connection member 200). In this case, a material with a low thermal expansion coefficient is a material with a lower thermal expansion coefficient than the base material. In an embodiment, the body 310 is formed such that an average thermal expansion coefficient of the materials included in the body 310 is higher than that of the materials included in the base material.

The insulating layer 320 includes an insulating material. The insulating layer 320 protects the body 310 from a welding device. To this end, the insulating layer 320 includes an insulating material. In an embodiment, the insulating material includes any of polymer resins, such as polyolefin resins, polyethylene, polypropylene, polyimide, polybutylene terephthalate, and the like. FIG. 8A illustrates an example in which the safety member 300 includes the body 310.

As shown in FIG. 8A, in an embodiment, the safety member 300 is formed in a circular shape, thereby enabling uniform expansion in all directions. Accordingly, the safety member 300 may maximize or increase the efficiency of expansion in the vertical direction.

In an embodiment, the joining part 210 described in FIGS. 3 to 7 may undergo resistance welding. When performing resistance welding, the safety member 300 may be welded together with the secondary battery 100 and/or the connection member 200 during the resistance welding process. In this case, an expansion capability of the safety member 300 may be reduced. Thus, when the joining part 210 is formed by resistance welding, the safety member 300 may further include the insulating layer 320 to prevent or substantially prevent the problems described above.

FIGS. 8B and 8C each illustrate an example in which the safety member 300 further includes the insulating layer 320. The insulating layer 320 may be provided at different positions on the body 310 depending on a cross-sectional shape of the safety member 300.

FIG. 8B illustrates an example in which the cross-sectional shape of the safety member 300 is a circular shape.

In an embodiment, the cross-section of the body 310 may be formed in a circular shape. In addition, the insulating layer 320 may surround at least a portion of an outer circumferential surface of the body 310. In an embodiment, for example, as shown in FIG. 8B, the insulating layer 320 may be provided to surround the entire surface of the body 310.

Accordingly, the body 310 may be located at the center of the safety member 300. In addition, the insulating layer 320 may be formed while surrounding the outer circumferential surface of the body 310. That is, the safety member 300 may include the body 310 with a circular cross-section and formed in a ring shape when viewed from above, and the insulating layer 320, which surrounds the outer circumferential surface of the body 310, to prevent or substantially prevent the body 310 from being exposed to the outside.

Accordingly, the insulating layer 320 may further improve the expansion efficiency of the safety member 300 while protecting the body 310.

FIG. 8C illustrates an example in which the cross-sectional shape of the safety member 300 is a rectangular shape.

In an embodiment, the cross-section of the body 310 may be formed in a rectangular shape. In addition, the insulating layer 320 may be stacked on the body 310 in the height direction of the secondary battery 100 (in a Z-axis direction) and provided on an upper surface of the body 310.

Accordingly, the body 310 may be located closer to the terminal 90 than the insulating layer 320 is. In addition, the insulating layer 320 may be formed on an upper side of the body 310. In an embodiment, when viewed from an upper surface of the secondary battery 100, a cross-sectional area of the insulating layer 320 may be formed to be equal to or greater than a cross-sectional area of the body 310. In an embodiment, when the cross-sectional area of the insulating layer 320 is formed to be greater than that of the body 310, unlike what is shown in FIG. 8C, the insulating layer 320 may be formed not only on the upper surface but also on at least a portion of a side surface of the body 310.

As described above, the safety member 300 may be stably formed by being shaped in a rectangular shape. For example, the safety member 300 may be formed larger or more stably due to a position, size, or shape of the joining part 210. In this case, the safety member 300 is formed in a rectangular shape, thereby ensuring both stability and expansion efficiency.

With this structure, the safety member 300 may be formed into any of various shapes depending on the applied environments (e.g., the welding method of the joining part, the size of the joining part, and the like).

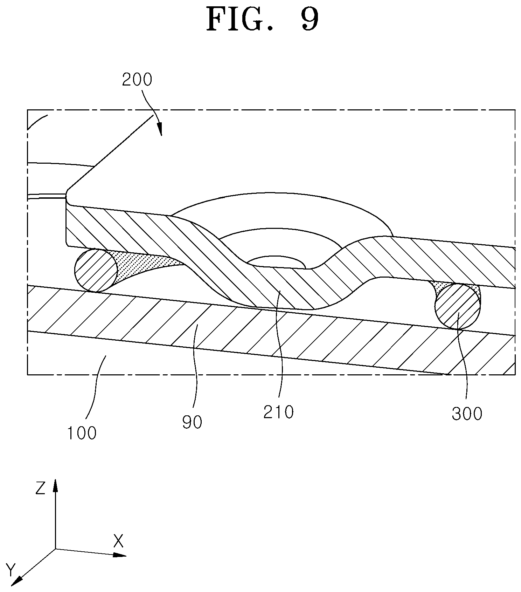

FIG. 9 is a view illustrating a cross-section taken along the line P-P' of FIG. 3 to describe the safety member according to an embodiment of the present invention.

In FIG. 9, "100" denotes the secondary battery according to an embodiment of the present invention described in FIGS. 1 to 8C. In FIG. 9, "200" denotes the connection member described in FIGS. 2 to 8. In FIG. 9, "300" denotes the safety member.

The secondary battery 100 according to an embodiment of the present invention includes an electrode assembly 40, a case 50 accommodating the electrode assembly 40, a terminal 90 located on an upper portion of the case 50 and electrically connected to the electrode assembly 40, the connection member 200 located on an upper portion of the terminal 90 and connected to the terminal 90, and the safety member 300 located between the terminal 90 and the connection member 200 and configured to separate the terminal 90 from the connection member 200 at a set temperature or higher.

As described with reference to FIGS. 5 to 7, the safety member 300 is located between the connection member 200 and the secondary battery 100. For example, the safety member 300 is located above the terminal 90 and below the connection member 200.

As shown in FIG. 9, for example, the safety member 300 may be disposed in contact with at least one of the terminal 90 and the connection member 200. In an embodiment, for example, the safety member 300 may be disposed in contact with the terminal 90. In an embodiment, for example, the safety member 300 may be disposed in contact with the connection member 200. In an embodiment, for example, the safety member 300 may be disposed such that a lower portion is in contact with the terminal 90 and an upper portion is in contact with the connection member 200. Therefore, the safety member 300 may effectively press the terminal 90 and/or the connection member 200 during expansion.

For example, the safety member 300 may be disposed in surface contact with the terminal 90 and/or the connection member 200. In an embodiment, a cross-section of the safety member 300 is formed in a rectangular shape, as illustrated in FIG. 8C, and the safety member 300 may provide a greater effect in increasing a pressing force due to surface contact.

In an embodiment, for example, the safety member 300 may be disposed such that a lower surface is in surface contact with the upper portion of the terminal 90. In an embodiment, for example, the safety member 300 may be disposed such that an upper surface is in surface contact with a lower portion of the connection member 200. In an embodiment, for example, the safety member 300 may be disposed such that the lower surface is in contact with the upper portion of the terminal 90 and the upper surface is in surface contact with the lower portion of the connection member 200. This allows the safety member 300 to increase the pressing force through the contact surface during expansion.

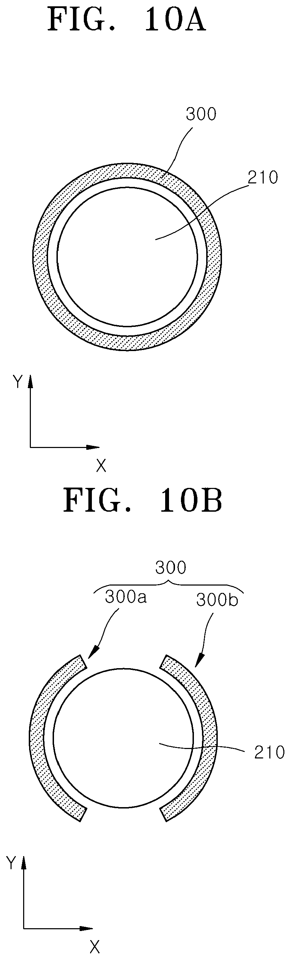

FIGS. 10A to 10C are schematic views each illustrating an example in which the safety member according to an embodiment of the present invention is applied to the joining part.

In FIGS. 10A to 10C, "210" denotes the joining part described in FIGS. 3 to 9. In FIGS. 10A to 10C, "300" denotes the safety member described in FIGS. 4 to 9.

FIGS. 10A to 10C illustrate the joining part 210 and the safety member 300 when viewed from above.

The safety member 300 according to an embodiment of the present invention is formed to surround at least a portion of the joining part 210. Various examples of the safety member 300 will be described below.

FIG. 10A illustrates an example in which the safety member 300 is formed to surround the entirety of the joining part 210. In an embodiment, for example, the safety member 300 may be formed in a ring shape to surround the joining part 210. In an embodiment, the safety member 300 is formed to surround the entirety of the joining part 210, and the safety member 300 is fixed to the joining part 210 without undergoing a separate bonding process with the secondary battery 100 and/or the connection member 200. Therefore, the safety member 300 may not move away from its position surrounding the joining part 210 because its central hollow portion is engaged by the joining part 210. Accordingly, the safety member 300 may provide a solution that simplifies a process while enabling easy disconnection of the secondary battery 100 and the connection member 200.

FIG. 10B illustrates an example in which the safety member 300 is formed to surround a portion of the joining part 210. As shown in FIG. 10B, the safety member 300 may include one or more safety member islands 300a and 300b. The safety member islands 300a and 300b are formed to be spaced apart from each other. Each of the safety member islands 300a and 300b is provided around the joining part 210. Each of the safety member islands 300a and 300b may be fixed to the joining part 210, for example, by being partially joined to the secondary battery 100 or the connection member 200. Accordingly, the safety member 300 may provide a solution for reducing material costs. Further, by partially positioning safety member islands only at locations of the joining part 210, to which the greatest force is applied, the safety member 300 can achieve both material cost reduction and disconnection efficiency.

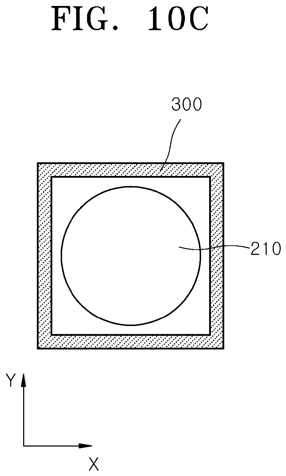

Referring to FIG. 10C, the safety member 300 according to an embodiment may be formed to surround the entirety of the joining part 210. For example, the safety member 300 may be formed in a polygonal ring shape when viewed from above. For example, the safety member 300 may be formed in a rectangular (e.g., square) ring shape, as shown in FIG. 10C. In an embodiment, the safety member 300 may be fixed to the joining part 210 by engaging with the joining part 210 in a ring shape. This indicates that the safety member 300 can be compatible with the joining parts 210 of various shapes.

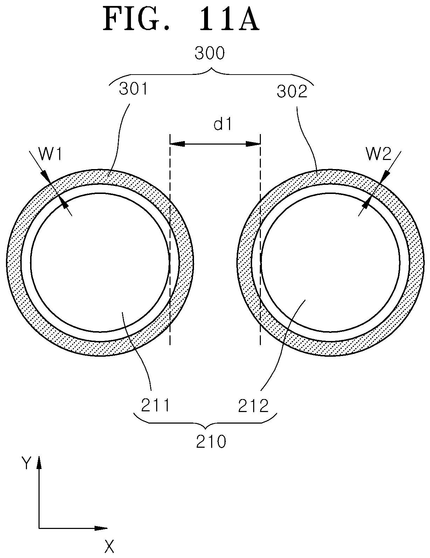

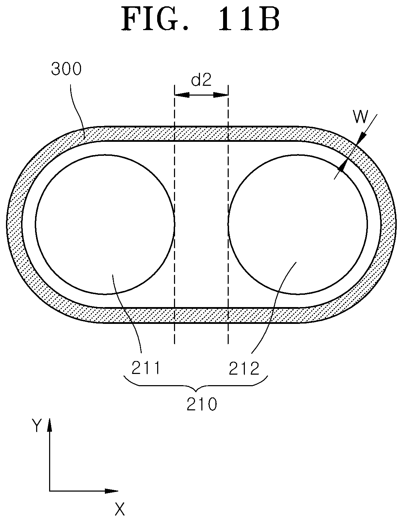

FIGS. 11A and 11B are schematic views each illustrating an example in which the safety member according to an embodiment of the present invention is applied to the joining part.

In FIGS. 11A and 11B, "210" denotes the joining part described in FIGS. 3 to 10. In FIGS. 11A to 11B, "300" denotes the safety member described in FIGS. 4 to 10.

The joining part 210 according to an embodiment of the present invention may include a first joining part 211 and a second joining part 212 formed to be spaced apart from the first joining part 211 by a distance (e.g., a predetermined distance).

In an embodiment, the first joining part 211 and the second joining part 212 may be formed between a secondary battery 100 and a connection member 200. That is, the connection member 200 may be welded to the secondary battery 100 to form two joining parts. Therefore, the battery module 1000 may maintain a welding strength between the secondary battery 100 and the connection member 200 even if an incomplete welding phenomenon occurs due to welding scatter.

The safety member 300 according to an embodiment of the present invention may include at least one of a first safety member 301 and a second safety member 302. In an embodiment, the first safety member 301 may surround at least a portion of the first joining part 211. In an embodiment, the second safety member 302 may surround at least a portion of the second joining part 212.

In an embodiment, the first safety member 301 and the second safety member 302 may be provided separately as shown in FIG. 11A. In an embodiment, the first safety member 301 and the second safety member 302 may form a single safety member 300, as shown in FIG. 11B.

A predetermined distance indicates the shortest distance between the first joining part 211 and the second joining part 212 when viewed from above.

FIG. 11A illustrates an example in which the predetermined distance is relatively large.

For example, a predetermined distance d1 may exceed a set distance. At this time, the set distance may be the sum of thicknesses of the safety members 300, which are located between the first joining part 211 and the second joining part 212, during thermal expansion.

For example, when the predetermined distance d1 is greater than the sum of thicknesses W of the thermally expanded safety members 300, the safety member 300 may include the first safety member 301 and the second safety member 302 provided separately from each other.

The first safety member 301 is formed to surround at least a portion of the first joining part 211. The second safety member 302 is formed to surround at least a portion of the second joining part 212.

For example, at least one of the first safety member 301 and the second safety member 302 may be located between the first joining part 211 and the second joining part 212.

In an embodiment, for example, the first safety member 301 may completely surround the first joining part 211, and the second safety member 302 may completely surround the second joining part 212.

The thickness of the thermally expanded first safety member 301 may be referred to as W1, and the thickness of the thermally expanded second safety member 302 may be referred to as W2. In this case, the predetermined distance d1 is greater than the sum of W1 and W2. Through this, it is possible to prevent or substantially prevent an issue of the predetermined distance d1 being too short, which would not allow the first safety member 301 and the second safety member 302 to expand sufficiently.

In an embodiment, the thermally expanded safety member 300 may represent a state in which the safety member 300 is maximally thermally expanded. In an embodiment, the thermally expanded safety member 300 may represent a state of expansion when a predetermined amount of heat is applied to the safety member 300 for a period (e.g., a predetermined period) of time.

With this configuration, the safety member 300 can increase the force needed to disconnect the joining part 210 and separate the secondary battery 100 from the connection member 200 by being correspondingly formed for each joining part 210.

In an embodiment, when the safety member 300 can be disposed for each joining part 210 as described above, the cross-sectional shape of the safety member 300, when viewed from above, may be, for example, a circular shape (including, for example, FIG. 8A and/or FIG. 8B). By forming the cross-sectional shape of the safety member 300 as a circular shape, both expansion efficiency and the force for separation can be maximized or increased.

FIG. 11B illustrates an example in which the predetermined distance is relatively small.

For example, a predetermined distance d2 may be less than or equal to a set distance. In an embodiment, the set distance is the sum of thicknesses W of the safety members 300 that are intended to be located between the first joining part 211 and the second joining part 212. For example, the set distance may be the sum of the thicknesses of the safety members 300 during thermal expansion.

For example, when the predetermined distance d2 is less than or equal to the sum of the thicknesses W of the thermally expanded safety members 300, the safety member 300 may be formed to surround at least a portion of the entirety of the first joining part 211 and the second joining part 212. In this case, for example, the safety member 300 may not be disposed between the first joining part 211 and the second joining part 212. For example, at least one of the first safety member 301 and the second safety member 302 may not be disposed between the first joining part 211 and the second joining part 212.

In an embodiment, the predetermined distance d2 is less than or equal to twice W.

In an embodiment, the thermally expanded safety member 300 may represent a state in which the safety member 300 is maximally thermally expanded. In an embodiment, the thermally expanded safety member 300 may represent a state of expansion when a certain amount (e.g., a predetermined amount) of heat is applied to the safety member 300 for a certain period (e.g., a predetermined period) of time.

As described above, by forming the safety member 300 to completely surround the entire joining part 210, the issue of the predetermined distance d2 being too small, which prevents the safety member 300 from being located between the joining parts, can be resolved.

In an embodiment, the safety member 300 is disposed to cover the entirety of the joining part 210 as described above, and the cross-sectional shape of the safety member 300 in the vertical direction may be, for example, a circular shape or polygonal shape (including, for example, of FIG. 8C). For example, if the cross-sectional shape of the safety member 300 in the vertical direction is formed as a polygonal shape, such as a rectangular shape, the safety member 300 can be more stably located and fixed on the secondary battery 100, even though the safety member 300 is formed over a wide area.

Although not shown in FIG. 11, the predetermined distance may be greater than the thickness of a thermally expanded safety member 300 but less than the sum of the thicknesses of the thermally expanded safety members 300. That is, the predetermined distance may be less than or equal to the set distance but greater than the thickness of one thermally expanded safety member 300.

In an embodiment, only one of the first safety member 301 and the second safety member 302 may be located between the first joining part 211 and the second joining part 212. For example, the first safety member 301 may completely surround the first joining part 211. In another embodiment, for example, the second safety member 302 may surround only a portion of the second joining part 212.

Through this configuration, the battery module 1000 according to one or more embodiments of the present invention may prevent or substantially prevent ignition of the secondary battery 100 and/or the battery module 1000 by disconnecting the joining part 210 between the secondary battery 100 and the connection member 200 through the safety member 300 if the secondary battery 100 is in an abnormal state.

According to one or more embodiments of the present invention, a secondary battery and/or a battery module with improved safety is provided.

According to one or more embodiments of the present invention, a secondary battery and/or a battery module, allowing an electrical connection between a connection member and the secondary battery to be cut off without the use of a separate sensor, is provided.

According to one or more embodiments of the present invention, a secondary battery and/or battery module that can prevent or substantially prevent ignition is provided.

However, it will be appreciated by those skilled in the art that aspects and effects that can be achieved through the present invention are not limited to those described herein and that other aspects, effects, and advantages of the present invention will be more clearly understood from the detailed description.

Although the present invention has been described with reference to some example embodiments and drawings, the present invention is not limited thereto and may be variously implemented by those of ordinary skill in the art to which the present invention pertains, within the technical idea of the present invention and equivalents of the claims.

## Claims

1. A secondary battery comprising:
an electrode assembly;
a case accommodating the electrode assembly;
a terminal over the case and electrically connected to the electrode assembly;
a connection member over the terminal and connected to the terminal; and
a safety member between the terminal and the connection member and configured to separate the terminal from the connection member at a set temperature or higher.

2. The secondary battery as claimed in claim 1, wherein the safety member is configured to thermally expand at the set temperature or higher to separate the terminal from the connection member.

3. The secondary battery as claimed in claim 1 or 2, wherein the safety member is in surface contact with at least one of the terminal and the connection member.

4. The secondary battery as claimed in claim 1, 2 or 3, wherein the connection member comprises a joining part that is joined to the terminal.

5. The secondary battery as claimed in claim 4, wherein the safety member surrounds at least a portion of the joining part.

6. The secondary battery as claimed in claim 5, wherein the safety member is located at an equal distance from the joining part.

7. The secondary battery as claimed in claim 4, 5 or 6, wherein the safety member surrounds the joining part in a closed cross-sectional shape.

8. The secondary battery as claimed in any one of claims 4 to 7, wherein the joining part comprises a first joining part and a second joining part spaced apart from the first joining part by a certain distance, and
the safety member comprises at least one of a first safety member surrounding at least a portion of the first joining part and a second safety member surrounding at least a portion of the second joining part.

9. The secondary battery as claimed in claim 8, wherein when the certain distance is greater than a set distance, the first safety member surrounds the first joining part, and
the second safety member surrounds the second joining part.

10. The secondary battery as claimed in claim 8 or 9, wherein when the certain distance is less than or equal to a set distance, at least one of the first safety member and the second safety member is not located between the first joining part and the second joining part.

11. The secondary battery as claimed in any preceding claim, wherein the safety member comprises:
a body comprising a thermally expandable material; and
an insulating layer on at least one surface of the body and comprising an insulating material.

12. The secondary battery as claimed in claim 11, wherein a cross-section of the body has a circular shape, and
the insulating layer surrounds an entire surface of the body.

13. The secondary battery as claimed in claim 11, wherein, in the safety member, a cross-section of the body has a rectangular shape, and
the insulating layer is on an upper surface of the body.

14. The secondary battery as claimed in claim 11, 12 or 13, wherein the thermally expandable material has a higher thermal expansion coefficient than a material of at least one of the case and the connection member.

15. A battery module comprising:
a plurality of secondary batteries; and
a housing accommodating the plurality of secondary batteries,
wherein each of the secondary batteries is a secondary battery according to any preceding claim.
